# EUROPEAN PATENT APPLICATION

(11) **EP 1 293 935 A2**
(43) Date of publication of application: **19.03.2003**
(21) Application number: 02256073.4
(22) Date of filing: 02.09.2002
(51) Int. Cl.: G06T 17/50

(54) **Method for constructing polygonized geographic features**

(30) Priority: 17.09.2001 US 953656
(71) Applicant: Navigation Technologies Corporation, Chicago, Illinois 60654 (US)
(72) Inventor: Yang, Xiangheng, Glenview, Illinois 60025 (US)
(74) Representative: McLeish, Nicholas Alistair Maxwell

(57) **Abstract**

A method for constructing a polygon from data representations of a given plurality of links. A first point of a candidate polygon is determined by selecting a point located on one of the given plurality of links. Then, a first known link that forms part of the boundary of a candidate polygon is determined to be that link upon which the first point is located. The orientation of the first known link is determined. Then, each subsequent known link that forms part of the boundary of the candidate polygon is determined by selecting from the given plurality of links that link (1) that connects to an end of a known link in a chosen direction and (2) that forms a minimum rotation angle therewith in a chosen rotational direction. After determining that the candidate polygon is a complete polygon, any links from the given plurality of links that are not shared by the complete polygon with any other candidate polygon are removed from the given plurality of links. The process continues until all the links of the given plurality of links are removed. The process also determines all links that do not form part of any complete polygon.

## Description

### BACKGROUND OF THE INVENTION

The present invention relates to a method of constructing one or more data representations of polygons from a plurality of data representations of links.

In geographic databases, polygons are used to represent two-dimensional areas, such as lakes, recreational parks, cities, counties, states, golf courses, and so on. In some types of geographic databases, a polygon is represented by a series of links connected to one another to form the closed boundary of the polygon. A common operation that is performed using a geographic database is to construct one or more simple polygons from a list of data representations of links. This operation can be relatively complicated depending on the number of links. For example, the number of links may exceed 100,000. The construction of simple polygons from links can be further complicated if some of the links are shared by two or more polygons.

There are prior methods for constructing polygons from a list of links. However, prior methods are computationally intensive and accordingly prior methods take a relatively large amount of time to obtain a result.

Therefore, there is a need for a faster way to construct simple polygons from a given list of links.

### SUMMARY OF THE INVENTION

To address these and other objectives, the present invention comprises a method and program for constructing one or more simple polygons from data representations of a given plurality of links. A first point of a candidate simple polygon is determined by selecting a minimum point (such as the southern or western most point) located on one of the given plurality of links. Then, a first known link that forms part of the boundary of a simple candidate polygon is determined as that link upon which the first point is located. The orientation of the first known link is determined using a method such as calculation of the cross-product of the minimum point and its two adjacent points. Then, each subsequent known link that forms part of the boundary of the candidate polygon is determined by selecting from the given plurality of links that link (1) that connects to an end of a known link in a chosen direction and (2) that forms a minimum rotation angle therewith in a chosen rotational direction. After determining that the candidate polygon is a complete simple polygon, any links from the given plurality of links that are not shared by the complete simple polygon with any other candidate simple polygon are removed from the given plurality of links. The process continues until all the links of the given plurality of links are removed. The process also determines all links that do not form part of any complete simple polygon.

### BRIEF DESCRIPTION OF THE DRAWINGS

Figure 1 is a diagram that illustrates a geographic region and data representations of some of the features located in the geographic region.

Figure 2 is a diagram that illustrates a polygon used to represent a two-dimensional geographic area and a data representation of the polygon.

Figure 3 is a block diagram illustrating a software program that constructs one or more simple polygons from a list of links.

Figure 4 depicts graphically the process performed by the software program of Figure 3 whereby simple polygons are constructed from a list of links.

Figures 5A-5C are a flow chart of the process performed by the software program of Figure 3.

Figure 6 depicts a step in the process of Figures 5A-5C.

Figure 7 depicts a step in the process of Figures 5A-5C.

Figure 8 depicts another step in the process of Figures 5A-5C.

Figure 9 depicts still another step in the process of Figures 5A-5C.

### DETAILED DESCRIPTION OF THE PRESENTLY PREFERRED EMBODIMENTS

### I. THE GEOGRAPHIC DATABASE

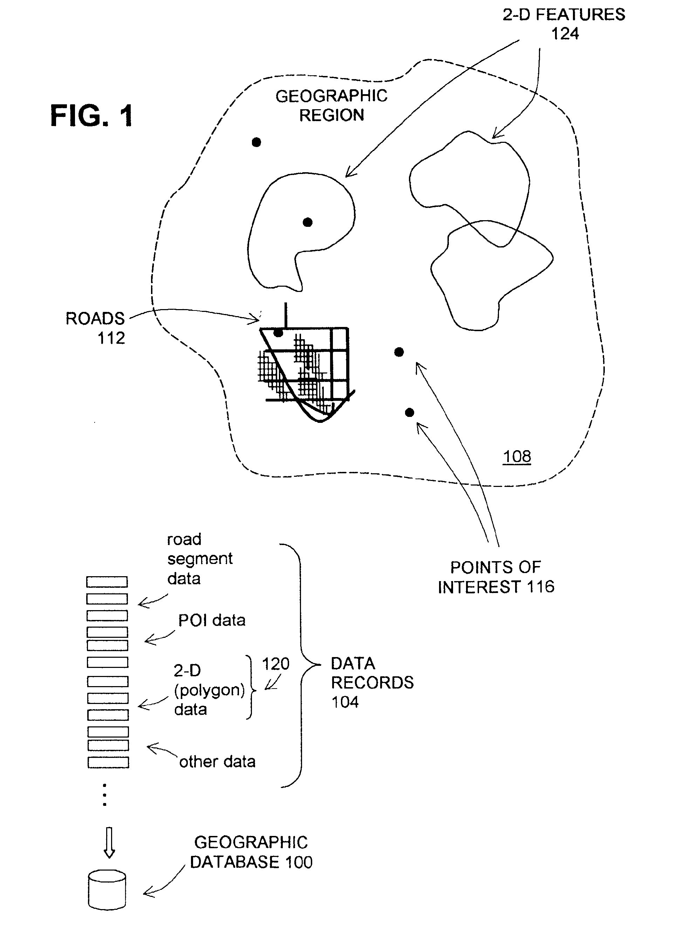

Referring to Figure 1, a geographic database 100 includes data that represent features that are located in a covered region 108. For example, the geographic database 100 may contain data that represent roads 112 and points of interest 116. The geographic database 100 also includes data 120 that represent two-dimensional features or entities 124. Some of the different kinds of two-dimensional features that can be represented in the geographic database 100 include land features (e.g., mountain ranges), bodies of water (e.g., lakes, ponds, swamps, wetlands), recreation areas (e.g., golf courses, parks, stadiums, forest preserves), business parks, industrial parks, and governmental administrative areas (e.g., cities, towns, states, townships, municipalities, counties, school districts), as well as other types of areas.

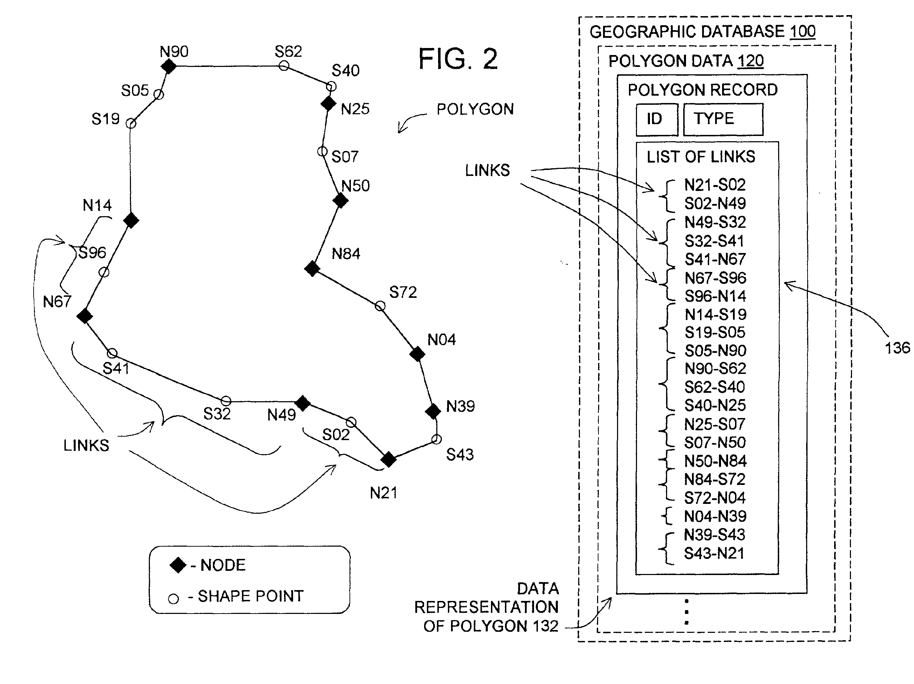

Referring to Figure 2, in the geographic database 100, two-dimensional features are represented using polygons. In other words, in the geographic database 100, the data that are used to represent two-dimensional features describe these features as polygons. In the geographic database 100, the boundary of the polygon corresponds to the boundary of the represented two-dimensional feature.

The following terminology applies to the representation of two-dimensional features in the geographic database 100.

"Node" - A point that terminates a link.

"Line segment" - A straight line connecting two points.

"Link" (or "edge") - A contiguous, non-branching string of one or more line segments terminating in a node at each end.

"Shape point" - A point along a link between two nodes.

"Oriented Link" - A link that has a starting node (referred to as the "reference node") and an ending node (referred to as the "non-reference node"). The "leading end" of a link contains the non-reference node.

"Simple Polygon" - An interior area of an outer boundary formed by a string of oriented links that begins and ends in one node. (A simple polygon does not cross itself.)

"Polygon" - The area bounded by an outer boundary and none or at least one interior boundary (e.g., a hole or island). A polygon is constructed from one outer simple polygon and none or at least one inner simple polygon. A polygon is simple if it just consists of one simple polygon, or complex if it has at least one inner simple polygon.

The geographic database 100 follows certain conventions. For example, links do not cross themselves and not cross each other except at a node. Also, there are no duplicated shape points, nodes or links. Two links that connect to each other have a common node. In the geographic database 100, overlapping two-dimensional geographic features are represented by overlapping polygons. When polygons overlap, the boundary of one polygon crosses the boundary of the other polygon. In the geographic database 100, the location at which the boundary of one polygon intersects the boundary of another polygon is represented by a node. (A node may be used to represent other locations along the boundary of a polygon other than a location at which the boundary of the polygon intersects the boundary of another polygon.) A shape point is not used to represent a point at which the boundary of a polygon intersects the boundary of another polygon.

In the geographic database 100, a data representation 132 of a polygon that represents a two-dimensional feature includes a list 136 that identifies each oriented link that forms the boundary of the polygon. According to a convention used in the geographic database, the list 136 identifies the oriented links in clockwise order. If the polygon has a hole (i.e., a second polygon located entirely inside the first polygon), the hole is identified by a list of oriented links listed in counterclockwise order.

### II. METHOD FOR CONSTRUCTION OF SIMPLE POLYGONS FROM LINKS

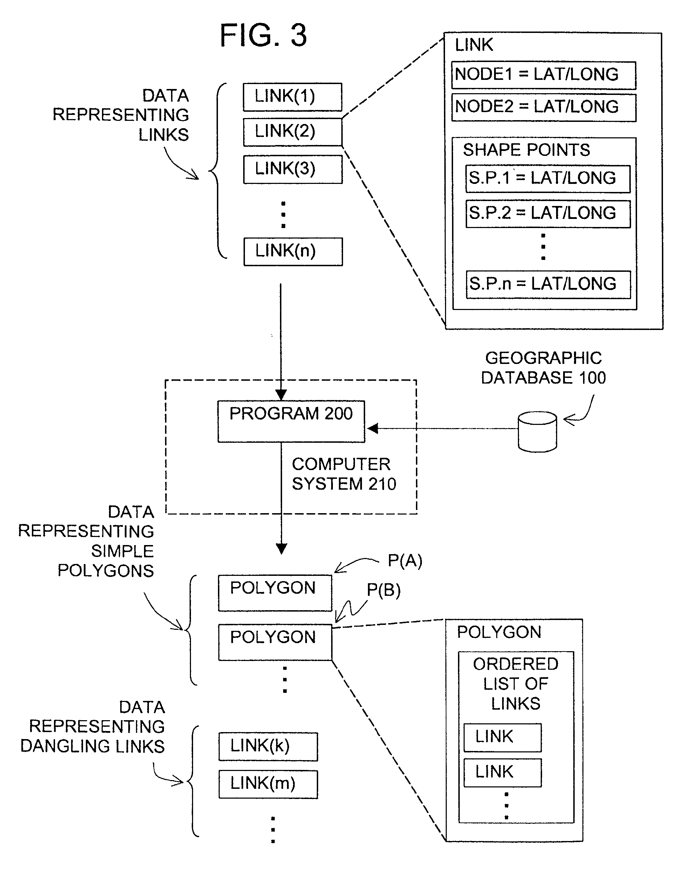

As mentioned above, with applications that use geographic databases, there is sometimes a need to construct simple polygons from a list of links. A method for constructing simple polygons is described in connection with Figures 3-9. Referring to Figure 3, the method is implemented by a software program 200 that uses the geographic database 100 that contains data representations of links and polygons, as described in connection with Figures 1 and 2. The software program 200 receives a list of data representations of links as an input. The software program 200 provides, as an output, a data representation of each simple polygon, if any, formed by the links. The software program 200 also provides, as an output, list(s) of any links from the input that do not form part of any simple polygon, i.e., dangling links.

The software program 200 is installed on a computer system 210. The computer system 210 may be a navigation system that uses the geographic database 100 to provide navigation-related features to a driver of a vehicle. The computer system 210 may be a server that uses the geographic database 100 to provide navigation-related services to various types of users, including vehicle drivers, persons who are not drivers, users of personal digital assistants (PDAs), cell phone users, and so on. The server that uses the geographic database may be connected to the Internet or other communications network. The computer system 210 may be used for compiling a geographic database, i.e., to produce a derived database product from a source database. The computer system 210 may also be a standalone computer that uses a geographic database to provide various navigation-related, map-related, or other types of features.

In any of these different systems, the software program 200 may be stored on a computer-readable medium, loaded from the medium into a memory of the system and run, as needed.

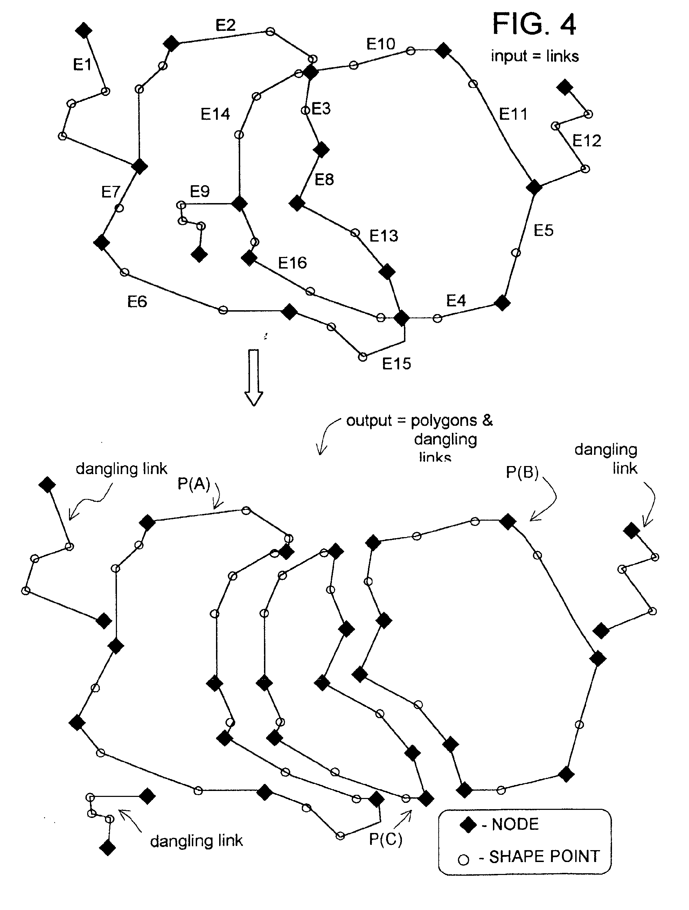

Figure 4 depicts graphically the process performed by the software program 200 of Figure 3. Figure 4 shows a plurality of links, labeled E1, E2 ... E15. Using the disclosed embodiment, all the simple polygons P(A), P(B) ...., formed by the links E1, E2 ... E15, are identified. In addition, any links that are not part of any simple polygon are identified.

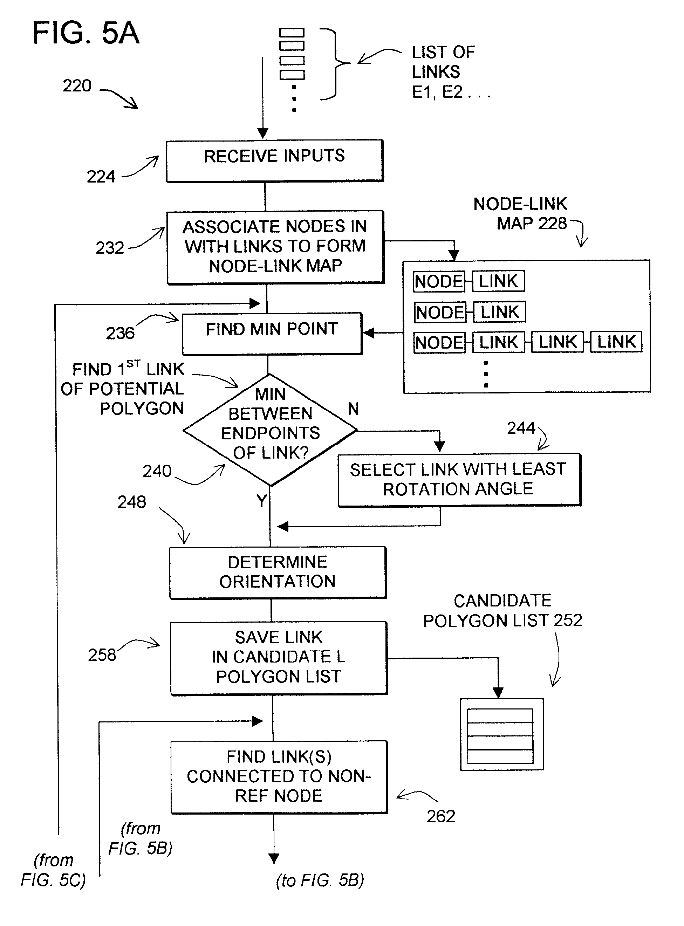

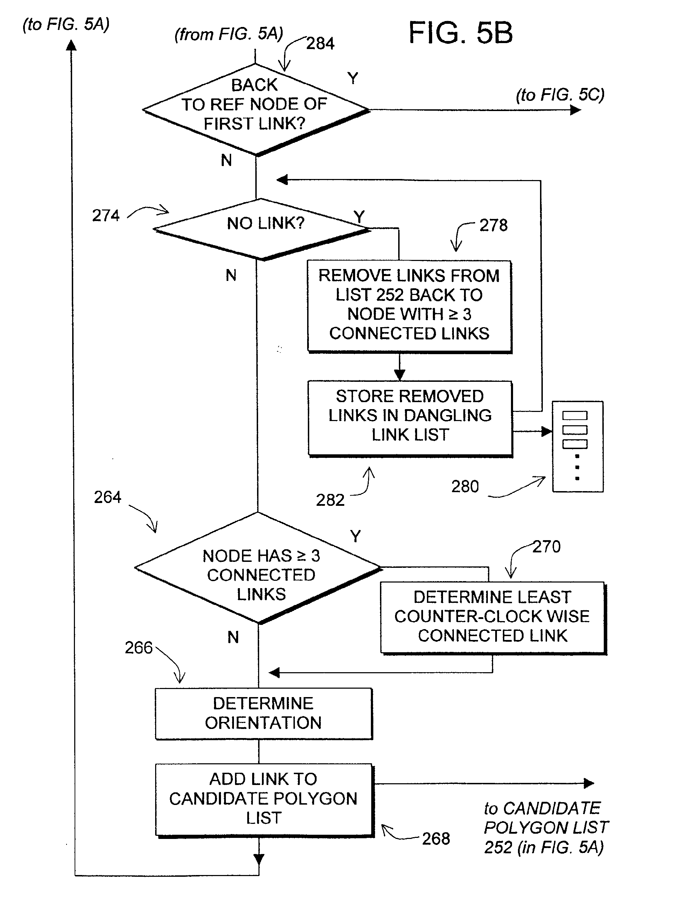

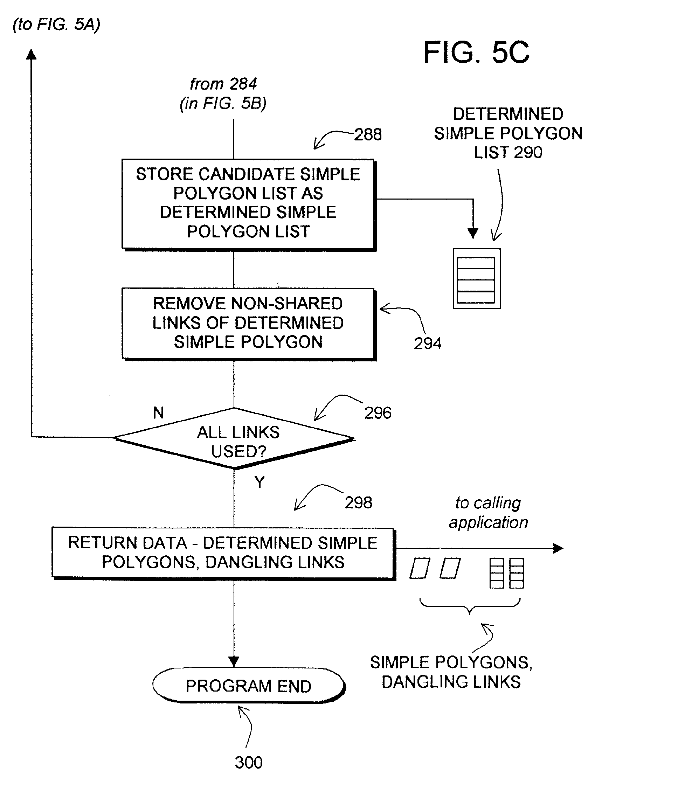

Figures 5A-5C shows steps in a process 220 performed by the software program 200 for constructing simple polygons from a list of links. The process 220 begins with a step in which the data representations of the links are received (Step 224). The process 220 includes a step that forms a node-link map 228 (Step 232). The node-link map 228 is formed using the list of links provided as input. Each node of the links provided as input is included as an entry in the node-link map 228. For each node included as an entry in the node-link map, all the links that connect to the node are identified and associated with the node in the map.

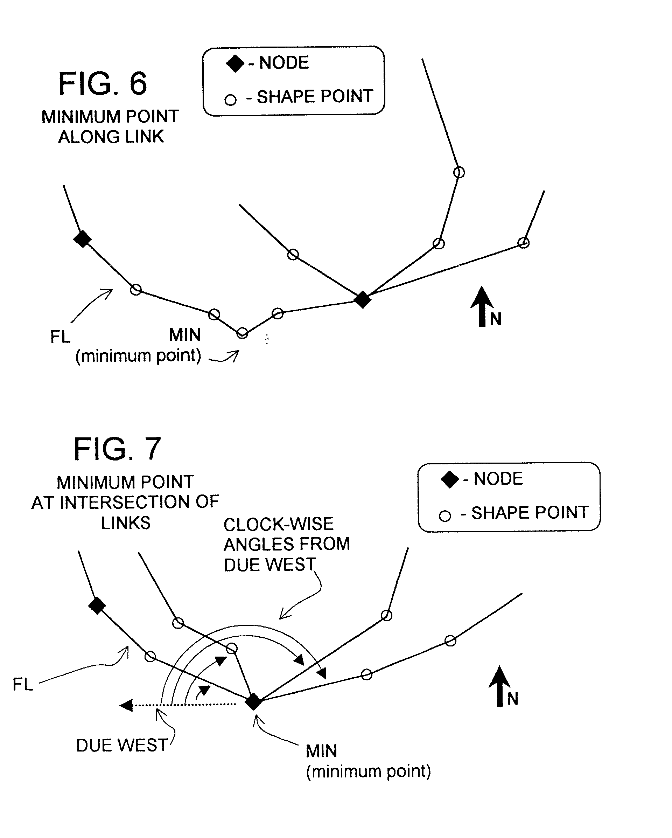

The process 220 includes a step that identifies the point located on the links that is at the extreme in a chosen direction (Step 236). In the process 220, the chosen direction is south and therefore the point selected is the point with the minimum latitude, i.e., the southernmost point (for points in the northern hemisphere). In alternative embodiments, other directions may be used, as explained below. The minimum point may be a shape point, as shown in Figure 6, or a node, as shown in Figure 7.

After finding the minimum point, a starting link ("FL") of a first candidate polygon is determined. If the minimum point is a shape point (as shown in Figure 6), the link that contains the shape point is the starting link (Step 240). If the minimum point is a node (as shown in Figure 7), a procedure is performed that selects one of the links that connects to the node as the starting link ("FL") of a first candidate polygon (Step 244). This procedure uses the node-link map 228 to identify all the links that connect to the node MIN. Then, the link that connects to the node, MIN, in the most westerly direction is selected as the starting link, FL. (The westerly direction is selected because it is 90° clockwise from due south, i.e., the chosen direction for the extreme point. If the chosen direction for the extreme point is a direction other than south, then the starting link is that link that leads away from the extreme point node in the direction which is 90° clockwise from the chosen direction.)

After the starting link, FL, of a first candidate polygon is determined, the orientation of this link is determined (Step 248). The orientation can be determined using known methods. For example, one way to determine the orientation of this link is to calculate the cross product of the points (i.e., shape points or nodes) that are immediately adjacent to the minimum point, MIN. Other methods may also be used.

Once the orientation of the starting link, FL, is determined, data indicating this link and its orientation are stored in a candidate polygon list 252 (Step 258). Then, using the node-link list 228, all the links connected to the non-reference node of this link, FL, are identified (Step 262).

If only one other link connects to the non-reference node of the starting link, this link becomes the next known link of the candidate simple polygon (Step 264 in Figure 5B). The orientation of this new link is determined. One way to determine the orientation of this new link is to designate as the reference node of this new known link the node that connects to the non-reference node of the previous (i.e., starting) link (Step 266). Data indicating this link and its orientation are added to the candidate simple polygon list 252 (Step 268).

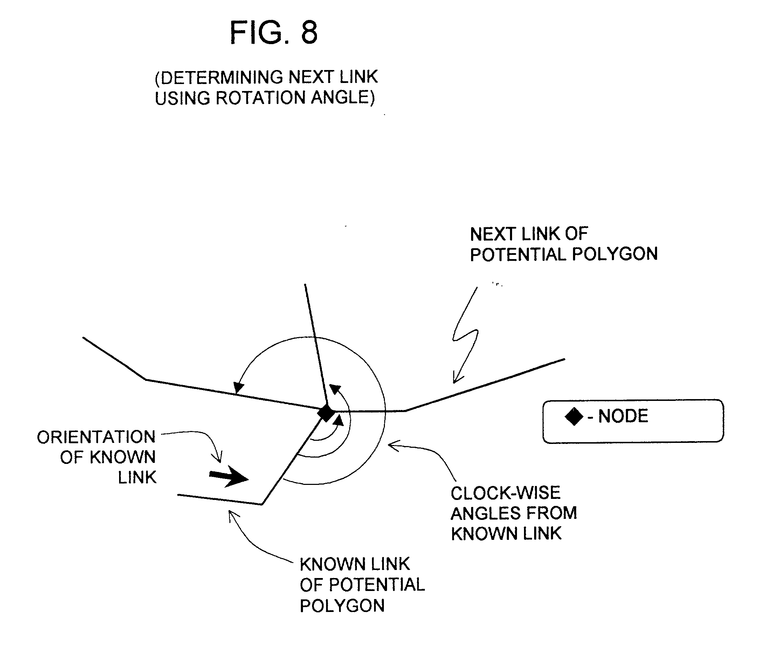

If more than one other link connects to the non-reference node of the starting link, a procedure is performed that selects one of these links for adding to the candidate simple polygon list 252 (Step 270). If more than one link connects to the non-reference node of the starting link, the link that forms the smallest angle in a counterclockwise direction from the starting link is selected as the next link of the candidate polygon. Figure 8 illustrates the selection of the link that forms the smallest angle in a counterclockwise direction from a current known link. After the procedure is used to determine which link to select as the next link of the candidate simple polygon, the orientation of this link is determined (Step 266) and data indicating this link and its orientation are added to the candidate simple polygon list 252 (Step 268).

The process 220 continues to add links to the candidate simple polygon list 252. The process 220 continues by (1) identifying the link(s) that connect to the non-reference node of a current known link (Step 262), (2) if more than one other link connects to the non-reference node, determining which link forms the minimum rotation angle to determine the next known link of the candidate polygon (Step 270), (3) determining the orientation of this new known link (Step 266) and (4) adding data to the candidate simple polygon list 252 that indicates this new link and its orientation (Step 268).

During the process of adding links to form a candidate simple polygon, it may occur that there is no link connected to the non-reference end of a current known link. The process 220 includes a step that tests for this condition (Step 274 in Figure 5B). If there is no link connected to the non-reference node of current known link, the current known link is part of a series of one or more dangling links. To identify the dangling links, the links in the candidate simple polygon list are traced back to the most recent node to which three of more links are connected. Then, all these links are removed from the candidate polygon list 252 (Step 278) and added to a dangling link list 280 (Step 282). Then, building of the candidate simple polygon list resumes from the leading node, i.e., the non-reference node of the most recently added link which is still in the simple candidate polygon list 252. The link (of the links remaining after removal of the dangling links) that forms the smallest angle in a counterclockwise direction from the current known link is added to the candidate simple polygon list and the process continues.

The process continues to add links to the candidate polygon list 252 (and possibly to the dangling links lists 280) until the reference node of the starting link, FL, is encountered (Step 284). When the reference node of the starting link is encountered, the data contained in the candidate polygon list 252 represents a complete, simple polygon. The data from the candidate polygon list are stored as a determined simple polygon in a data structure 290 (Step 288 in Figure 5C).

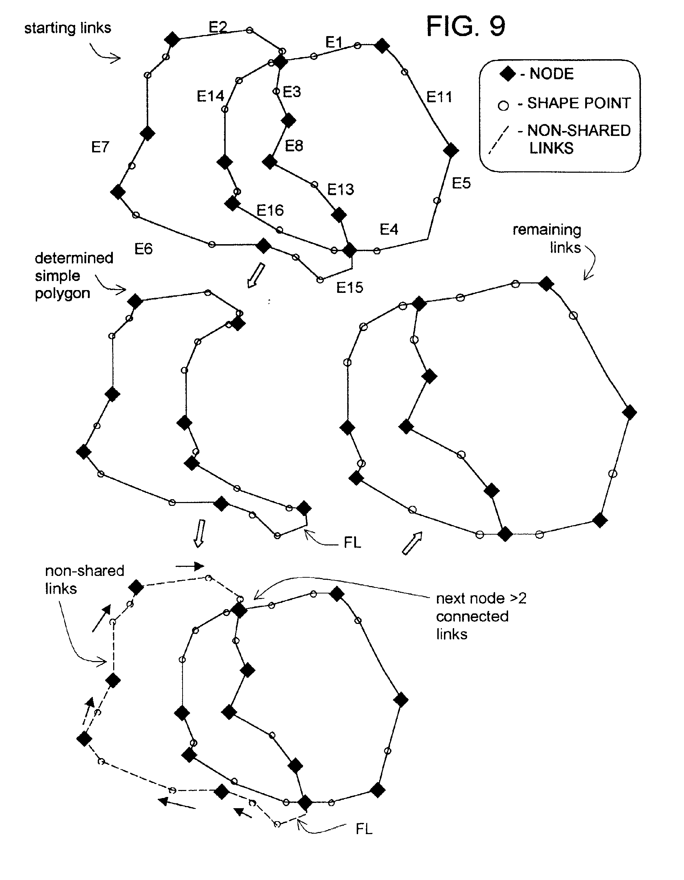

After a simple polygon is determined, all the links that form the boundary of the polygon, and that are not shared with any other candidate polygon, are removed from the node-link list 228 (Step 294). A procedure is used to determine which links from a simple polygon are not shared with any other polygons. According to this procedure, the starting link of the just determined simple polygon and each successive link, in a clockwise direction, that connects to the starting link up to a node to which three or more links attach are links that not shared with any other simple polygon. These links can be removed from the node-link list 228. Likewise, going backward from the starting link of the just determined simple polygon to each successive link in a counterclockwise direction up to a node to which three or more links attach are links that not shared with any other polygon. These links can be removed from the node-link list 228. Figure 9 illustrates this procedure of removing non-shared links after the determination of a simple polygon.

After removing the non-shared links from the node-link list, if there are still links in the node-link list, the process continues with the step of determining the southernmost point on the remaining links (Steps 296 and 232). The process continues until all the links have been removed from the node-link list 228.

When all the links have been removed from the node-link list 228, data indicating all the determined polygons and all the dangling links are returned to the calling application (Step 298) and the process ends (Step 300).

### III. FURTHER CONSIDERATIONS

### Consistent ordering - clockwise or counterclockwise

In the embodiments described above, it was explained that the data representations of polygons included lists of links used to represent the boundaries of the polygons and that the links contained on a list were ordered corresponding to a clockwise traversal of the represented polygon boundary via the links. It is not required that the lists of links used to represent polygons identify the links in clockwise order so long as the order in which the links are listed is consistent throughout the geographic database. For example, according to an alternative embodiment, instead of listing the links that form polygon boundaries in a clockwise order, data representations of polygons could list the links in a counterclockwise order. If a counterclockwise order is used for polygon boundaries, it might be preferable to use a clockwise order to represent holes in polygons.

In the embodiments described above, the first link of the candidate polygon was determined by finding the minimum point (i.e., the southernmost point) located on the links provided as input. It is not required to select the southernmost point. In alternative embodiments, a point located on the links that is at an extreme in any direction (e.g., the northernmost, the westernmost or the easternmost) can be used. For example, the easternmost point can be used by selecting the point with the minimum longitude, the westernmost point can be used by selecting the point with the maximum longitude, and the northernmost point can be used by selecting the point with the maximum latitude.

It is intended that the foregoing detailed description be regarded as illustrative rather than limiting and that it is understood that the following claims including all equivalents are intended to define the scope of the invention.

## Claims

1. A method for constructing polygons from data representations of a given plurality of links, comprising:
(a) determining a first point, wherein said first point is located on one of said given plurality of links;
(b) determining as a first known link that forms part of the boundary of a candidate polygon a link upon which the first point is located;
(c) determining an orientation of said first known link;
(d) determining each subsequent known link that forms part of the boundary of the candidate polygon by selecting from the given plurality of links that link that connects to a chosen ordered end of a known link and that forms a minimum rotation angle therewith in a chosen rotational direction; and
(e) after determining that the candidate polygon is a complete polygon, removing from the given plurality of links any links that are not shared by the complete polygon with any other candidate polygon.

2. The method of Claim 1 wherein said first point is at an extreme in a chosen direction.

3. The method of Claim 2 wherein the chosen direction is south.

4. The method of Claim 1 wherein the candidate polygon is determined to be a complete polygon when the first known link is encountered during the step of determining each subsequent known link.

5. The method of Claim 1 further comprising:
determining that a series of one or more links do not form a complete polygon when no link of said given plurality of links is determined to be connected to the chosen ordered end of a known link.

6. The method of Claim 1 further comprising:
returning to a calling application data indicating the links of said given plurality of links that do not form part of at least one complete polygon.

7. The method of Claim 1 further comprising:
returning to a calling application data indicating all the complete polygons formed of the given plurality of links.

8. The method of Claim 7 wherein each complete polygon is represented by a list of links that form a boundary of the complete polygon and wherein the links in the list are in an order that conforms to the order in which the links connect to each other to form the boundary of the polygon in a clockwise direction.

9. The method of Claim 1 wherein the polygons represent two-dimensional geographic features.

10. The method of Claim 1 wherein the steps of determining are performed by a software program that uses a geographic database containing data representations of polygons.

11. The method of Claim 1 wherein the steps of determining are performed on a server connected to the Internet and that provides navigation-related services to users.

12. A program for constructing one or more polygons from data representations of a given plurality of links, wherein said program is stored on a computer-readable medium, said program comprising:
program code that determines a first point, wherein said first point is located on one of said given plurality of links;
program code that determines as a first known link that forms part of the boundary of a candidate polygon a link upon which the first point is located;
program code that determines an orientation of said first known link;
program code that determines each subsequent known link that forms part of the boundary of the candidate polygon by selecting from the given plurality of links that link that connects to a chosen ordered end of a known link and that forms a chosen rotation angle therewith in a chosen rotational direction; and
program code that removes from the given plurality of links any links that are not shared by the complete polygon with any other candidate polygon after determining that the candidate polygon is a complete polygon.

13. The invention of Claim 12 wherein said program is run on a server connected to the Internet that provides navigation-related services to users.

14. The invention of Claim 12 wherein said polygons represent two-dimensional geographic features.

15. The invention of Claim 12 wherein said polygons are represented by data contained in a database that represents geographic features.

16. The invention of Claim 12 wherein the program code is executed on a server connected to the Internet that provides navigation-related services to users.
